(19) Europäisches Patentamt
European Patent Office
Office européen des brevets

(11) Veröffentlichungsnummer: **0 457 101 A2**

(12) # EUROPÄISCHE PATENTANMELDUNG

(21) Anmeldenummer: **91107055.5**

(51) Int. Cl.5: **C09K 3/10**

(22) Anmeldetag: **01.05.91**

(30) Priorität: **15.05.90 DE 4015544**

(43) Veröffentlichungstag der Anmeldung:
**21.11.91 Patentblatt 91/47**

(84) Benannte Vertragsstaaten:
**AT BE CH DE DK ES FR GB IT LI NL SE**

(71) Anmelder: **BAYER AG**
**W-5090 Leverkusen 1 Bayerwerk(DE)**

(72) Erfinder: **Meussdoerffer, Johann Nikolaus, Dr.**
**Paul-Klee-Strasse 61**
**W-5090 Leverkusen 1(DE)**
Erfinder: **Vehlewald, Peter, Dr.**
**Fasanenstrasse 20**
**W-5653 Leichlingen(DE)**
Erfinder: **Kapps, Manfred, Dr.**
**Odenthaler Markweg 56**
**W-5060 Bergisch Gladbach 2(DE)**

(54) **Verwendung von Siliconkautschuk bei der Kanalsanierung mittels speziell ausgerüsteter Packer.**

(57) Die vorliegende Erfindung betrifft die Verwendung von Siliconkautschuk, der mit einem linearen Polysiloxan der Struktur

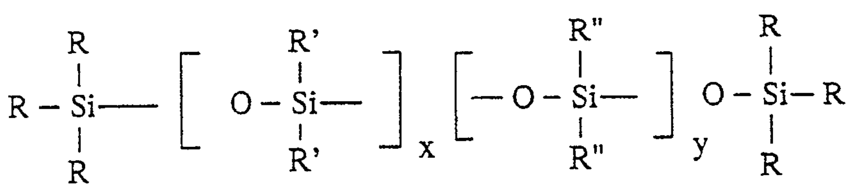

bzw.

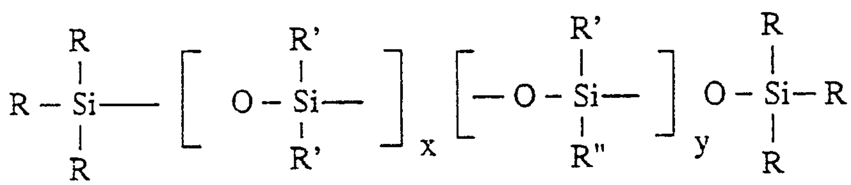

als inneres Formtrennmittel versetzt ist und wobei R für Methyl oder Phenyl, R' für Methyl und R" für Phenyl steht und y und x so eingestellt sind, daß einerseits eine Viskosität von 50 bis 2000 mPa.s bei 25 °C resultiert, andererseits ein Methyl- zu Phenyl-Verhältnis von 2,5 bis 0,6 im Polysiloxan erreicht wird, zur Herstellung von Packern für die Abdichtung von beschädigten Kanalsystemen.

EP 0 457 101 A2

Die Kanalisationsnetze der Kommunen und Industriebetriebe sind inzwischen sehr alt bzw. wurden im Krieg insbesondere durch Bombenexplosionen stark erschüttert und weisen deshalb viele Risse und damit Undichtigkeiten auf. Im Zuge eines verstärkten Umweltbewußtseins wird nunmehr auch auf die potentiellen Gefahren durch die im Erdreich verlegten undichten Abflußsysteme geachtet. Die herkömmliche Weise der Ausbesserung nach vorherigem Ausschachten ist bei der dichten Bebauungsweise, der hohen Verkehrsdichte und der Kosten wegen heute größtenteils nicht mehr tragbar.

Es wurden daher viele Systeme getestet, wobei sich letztlich die sog. "Packer" vom Prinzip her besonders bewährt haben, um das Kanalrohr von innen her gegen die auslaufende Flüssigkeit abzudichten. Die Packer können ferngesteuert bedient werden und sind zudem sehr einfach konstruiert, so daß sie auch in den vorher nicht gereinigten, undichten Kanalisationsrohren direkt eingesetzt werden können, das Prinzip der Arbeitsweise wird ausführlich, z.B. in der Europäischen Patentanmeldung 0177289 beschrieben.

Bei den technischen Einsätzen der Packer trat nun folgendes Problem auf: Im allgemeinen nach ca. 10 Einsätzen zum Verschließen der undichten Stellen im Kanalsystem mußte der Packer wieder ausgebaut und repariert werden; es zeigte sich, daß die am Packer angebrachten, aufblasbaren Gummischürzen entweder den im Kanalsystem auftretenden Chemikalien nicht gewachsen waren oder auch noch zusätzlich von dem in die Fugen einzuspritzenden Dichtungsmaterial so angegriffen wurden, daß spätestens beim Verschieben des Packers im Kanalrohr mechanische Verletzungen des Gummis auftraten oder sogar das ausgehärtete Dichtungsmaterial aus der Fuge mit herausgerissen wurde. Es ergab sich daher die Aufgabe, einen geeigneten Kautschuk für den Packer zu finden, der sowohl eine hohe gummimechanische Festigkeit bei höchster chemischer Inertheit gegenüber den im Kanalsystem vorkommenden Produkten hat, als auch gegenüber der Dichtmasse unter Einsatzbedingungen beständig ist und gleichzeitig sich nicht mit der aushärtenden Dichtmasse verkleben läßt; kritisch war dabei insbesondere, daß als Dichtungsmaterial ein Polyurethansystem eingesetzt werden sollte, welches im noch nicht ausreagierten Zustand über hochreaktive Isocyanatgruppen verfügt, die ihrerseits mit allen Gruppen zu reagieren vermögen, die über aktiven Wasserstoff im Molekül verfügen.

Es wurde gefunden, daß nur Siliconkautschuk den vorgenannten hohen Anforderungen entspricht, sofern zusätzlich gewisse erfindungsgemäße Modifikationen erfolgen. Gegenstand der Erfindung ist somit die Verwendung von Siliconkautschuk, der mit einem linearen Polysiloxan der Strukturen

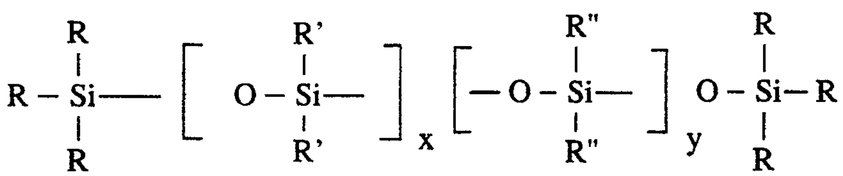

bzw.

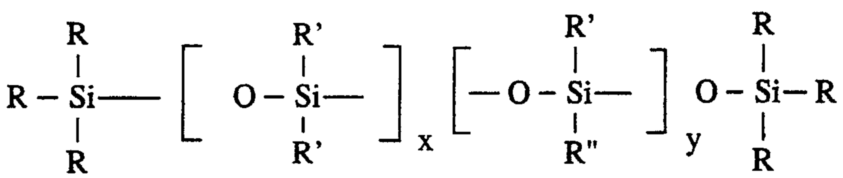

als inneres Entformungsmittel versetzt ist und wobei R für Methyl oder Phenyl, R' für Methyl und R" für Phenyl steht und y und x so eingestellt sind, daß einerseits eine Viskosität von 50 bis 2000 mPa.s bei 25° C resultiert, andererseits ein Methyl-zu Phenyl-Verhältnis von 2,5 bis 0,6 im Polysiloxan erreicht wird, zur Herstellung von Packern für die Abdichtung von beschädigten Kanalsystemen.

Die Werte für x in den obengenannten Polysiloxanen liegen etwa zwischen 4 und 20, vorzugsweise zwischen 5 und 10; für y etwa zwischen 2 und 15, vorzugsweise zwischen 3 und 10.

Die gesamten Untersuchungen, Prüfungen und Versuche zur Entwicklung eines Spezialpackers mit hohen Standzeiten (hohe Einsatzzyklen im Kanal ohne zwischenzeitlichen Ausbau zur Reparatur) erfolgten an einem käuflichen, peroxidisch vernetzbaren Siliconkautschuk von hoher gummimechanischer Festigkeit und geringer Quellfähigkeit. Der Siliconkautschuk enthält oberflächlich beladene pyrogene Kieselsäure als verstärkend wirkenden Füllstoff sowie vinylgruppenhaltige langkettige Polysiloxane, die nach der radikalischen Vernetzung mit Peroxiden oder der Strahlenvernetzung im Molekülverband eine Vernetzungscharakteristik aufweisen, wie sie für hochwertige Vulkanisate mit hoher Weiterreißfestigkeit und Wasserdampfbeständigkeit erforderlich ist. Solche Siliconkautschuke sind z.B. in W. Noll, Chemie und Technologie der

Silicone (1968) S. 346, Verlag Chemie bzw. Handbuch für die Gummi-Industrie (1970) S. 136 von Bayer-Leverkusen beschrieben. Zur Hitzestabilisierung wurden üblicherweise Eisenoxidpigmente, Titandioxidpigmente und/oder die in Siliconkautschuk leicht einarbeitbaren organischen Verbindungen der Seltenen Erdmetalle, insbesondere des Cer, zugesetzt. Durch diese Maßnahmen stand zunächst ein äußerst alterungsbeständiger, hochweiterreißfester Siliconkautschuk zur Verfügung, der allerdings gegenüber dem einzusetzenden Dichtungsmaterial auf Basis eines Polyurethansystems zur Abdichtung der defekten Kanalisationsleitungen immer noch keine ausreichende trenndende Wirkung aufweist.

Versuche, nachträglich "äußere" Trennmittel auf die Siliconkautschuk-Oberflächedes Packers aufzusprühen, verliefen negativ, als die erhoffte Trennwirkung maximal für einen Entformungsvorgang - entsprechend einer einmaligen Abdichtung im Kanal - ausreichte; analog verliefen Versuche mit handelsüblichen flüssigen oder wachsartigen Trennhilfsmitteln, die jeweils auf die Oberfläche aufzutragen waren, da sie praktisch nach jedem Arbeitsvorgang verbraucht oder mechanisch wieder entfernt worden waren. Selbst die Trennmittel auf Basis von Polymethylsiloxanen, welche vielfach in der Kunststoffspritzgußtechnik als Formtrennmittel eingesetzt werden, waren für den Packer mit dem Silikonkautschukmantel nicht geeignet; diese Trennmittel wirkten einerseits nur in sehr hohen Konzentrationen, verschlechterten dabei die gummimechanischen Eigenschaften des Kautschuks äußerst stark, da sie gleichzeitig eine Weichmacher-Eigenschaft entwickelten und in den Kautschuk hineindiffundierten (Anquellung).

Versuche, in den Siliconkautschuk direkt ein sog. inneres Entformungsmittel einzubauen, schienen daher fast aussichtslos, zumal die bekanntermaßen an sich hochwirksamen Polymethylsiloxane nur im hohen Konzentrationsbereich von ca. 20-40 % eine geringe Trennwirkung zeigten, gleichzeitig aber auch die gummimechanischen Eigenschaften so verschlechterten, daß ein technischer Einsatz unmöglich wurde. Es war also ein inneres Entformungsmittel gesucht, welches in kleinsten Konzentrationen einzusetzen ist, hohe Wirksamkeit besitzt, gleichmäßig langsam an die Oberfläche diffundiert und somit lange Standzeiten (Zykluszahlen) gewährleistet sowie die gummimechanische Eigenschaft des Siliconkautschuks nicht beeinträchtigt.

Übertaschenderweise wurde nun gefunden, daß, wenn anstelle der reinen Polydimethylsiloxane partiell durch Phenylgruppen modifizierte kettenförmige Polysiloxane eingesetzt werden, diese gut im Siliconkautschuk einarbeitbar sind, die Vulkanisation nicht stören und anschließend im Laufe der Zeit wieder langsam an die Oberfläche diffundieren und dort als inneres Entformungsmittel selbst bei geringen Konzentrationen wirken. Es zeigte sich, daß dabei der Phenylgehalt des Polysiloxans von entscheidender Bedeutung für die Wirkung als inneres Entformungsmittel gegenüber dem Polyurethan ist, wobei der Kettenlänge des Polysiloxans nur eine untergeordnete Bedeutung zukommt.

Versuche:

1. Wird ein herkömmlich vernetzter Siliconkautschuk (Typ Silopren® HV 3/531, der Bayer AG, Leverkusen) oberflächlich mit einem flüssigen Trennmittel behandelt, anschließend mit einem aushärtenden Polyurethansystem bestrichen, so kann nach erfolgter Aushärtung das Polyurethan zerstörungsfrei wieder abgezogen werden; wird dieser Siliconkautschuk nun ohne erneute Behandlung mit einem Trennmittel nochmals mit der aushärtenden Polyurethanmasse bestrichen, so kann jetzt nach erfolgter Aushärtung das Polyurethan nicht mehr ohne Beschädigung der Oberfläche des Siliconkautschuks abgezogen werden.

2. Wird erfindungsgemäß ein entsprechender Siliconkautschuk mit 3 Gew.-% des phenylgruppenhaltigen Polysiloxans

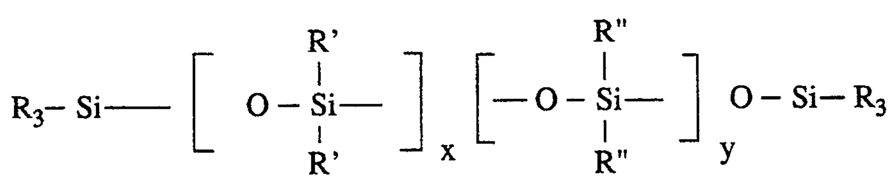

$x = 6$, $y = 4$ (im Mittel)

eingesetzt, darauf ohne weiteren Zusatz eines Trennhilfsmittels die aushärtende Polyurethanmasse aufgestrichen, so kann nach Beendigung des Aushärtungsprozesses das fertige Polyurethan leicht ohne Beschädigung der Siliconkautschuk- und Polyurethanoberfläche abgezogen werden; dieser Vorgang konnte anschließend noch 50 mal wiederholt werden, ohne daß die Trennwirkung nachließ.

Erfindungsgemäß werden daher Verbindungen der allgemeinen Struktur

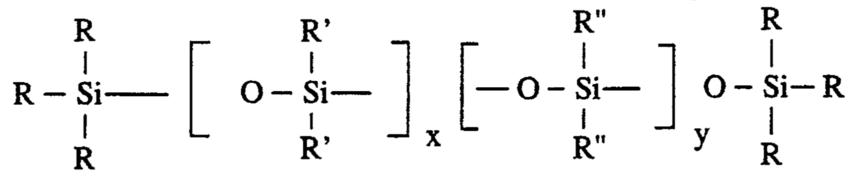

bzw.

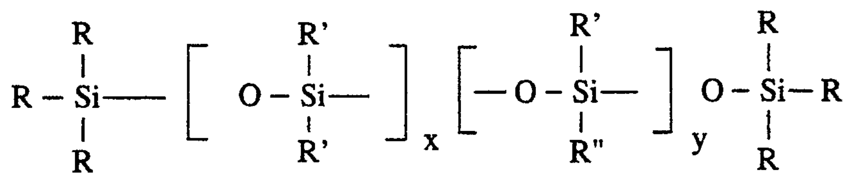

als innere Entformungsmittel in Siliconkautschuk eingesetzt, wobei R für Methyl oder Phenyl steht, R' Methyl und R'' Phenyl bedeuten; die Kettenlänge wird so gewählt, daß eine Viskosität von 50 bis 2000 mPa.s bei 25° C resultiert; optimale Trennwirkung gegenüber aushärtendem Polyurethan wird erzielt, wenn ca. 20 bis 50 % der Liganden des Polysiloxans Phenylgruppen sind.

Die erfindungsgemäß zugesetzten Entformungsmittel werden dem Siliconkautschuk in Mengen von 0,5 bis 10 Gew.-%, bevorzugt 2 bis 5 Gew.-% - bezogen auf Gesamtsilicon - zugesetzt.

**Patentansprüche**

1. Verwendung von Siliconkautschuk, der mit einem linearen Polysiloxan der Stuktur

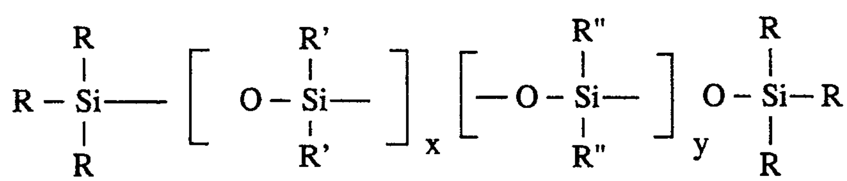

bzw.

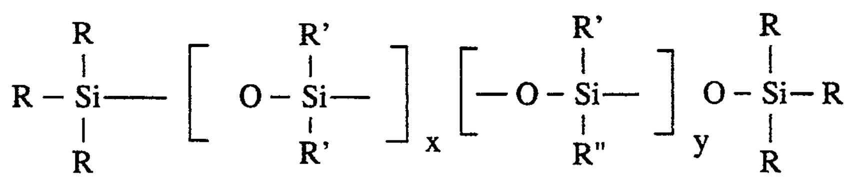

als inneres Formtrennmittel versetzt ist und wobei R für Methyl oder Phenyl, R' für Methyl und R'' für Phenyl steht und y und x so eingestellt sind, daß einerseits eine Viskosität von 50 bis 2000 mPa.s bei 25° C resultiert, andererseits ein Methyl- zu Phenyl-Verhältnis von 2,5 bis 0,6 im Polysiloxan erreicht wird, zur Herstellung von Packern für die Abdichtung von beschädigten Kanalsystemen.

2. Verwendung gemäß Anspruch 1, dadurch gekennzeichnet, daß der Siliconkautschuk 0,5 bis 10 % des Polysiloxans als reines Entformungsmittel enthält.